# FASCICULE DE BREVET EUROPEEN

(11) **EP 4 094 961 B1**
(45) Date de publication et mention de la délivrance du brevet: **30.10.2024**
(21) Numéro de dépôt: 22174864.3
(22) Date de dépôt: 23.05.2022
(51) Int. Cl.: B60H 1/00, B61D 27/00, B60H 1/32

(54) **UNITÉ DE CLIMATISATION SÈCHE**
TROCKENE KLIMAANLAGENEINHEIT
DRY AIR-CONDITIONING UNIT

(30) Priorité: 27.05.2021 FR 2105488
(43) Date de publication de la demande: 30.11.2022
(73) Titulaire: Société Nouvelle de Climatisation (SNDC), 31860 Labarthe sur Leze (FR)
(72) Inventeur: SANCHEZ, Nicolas, 31860 LABARTHE SUR LEZE (FR); CASTERAS, Anthony, 31860 LABARTHE SUR LEZE (FR)
(74) Mandataire: Argyma

(56) Documents cités:
- FR-A1- 2 679 986
- JP-A- H10 203 151
- US-A1- 2018 105 012

## Description

### [Domaine technique]

La présente invention se rapporte au domaine de la climatisation et concerne plus particulièrement une unité de climatisation, notamment pour cabine de téléphérique.

### [Etat de la technique antérieure]

Le document US2018/105012A1 montre un système de climatisation avec un ventilateur en aval de l'évaporateur. De nos jours, il est connu d'équiper les cabines de téléphérique d'une unité de climatisation fonctionnant en mode de refroidissement. De manière connue, une telle unité de climatisation comporte un caisson dans lequel sont placés un évaporateur, permettant de refroidir l'air par évaporation d'un liquide réfrigérant (ou frigorigène), et une soufflerie placée en sortie dudit évaporateur afin de diffuser l'air refroidi hors du caisson. Le changement d'état du réfrigérant liquide en vapeur consomme des calories et permet d'absorber la chaleur de l'air ambiant pour le refroidir.

Ce faisant, l'évaporateur peut également produire en sortie des gouttelettes d'eau qui, si elles ne sont pas récupérées, peuvent se diffuser sur la soufflerie ou sur d'autres éléments électriques montés à l'intérieur du caisson tels que, par exemple, le circuit de contrôle du caisson, des câbles ou des connecteurs électriques, ce qui peut endommager l'unité de climatisation. Ces gouttelettes peuvent également se diffuser hors du caisson dans la cabine, notamment sur les passagers, ce qui présente un inconvénient important, en particulier lorsque les températures à l'intérieur du caisson sont basses. Ce phénomène est connu sous le nom de « spitting ».

Dans une première solution connue, l'évaporateur comporte des ailettes hydrophiles, chargées de capter les gouttelettes d'eau, et un bac à condensat, placé sous les ailettes afin de récupérer lesdites gouttelettes. Dans une deuxième solution connue, un médium alvéolaire de type mousse est placé en sortie de l'évaporateur afin de collecter les gouttelettes d'eau. Cependant, aucune de ces deux solutions ne permet d'empêcher totalement le phénomène de « spitting », avec les inconvénients précités.

Il existe donc un besoin d'une solution simple et efficace permettant de remédier au moins en partie à ces inconvénients.

### [Exposé de l'invention]

L'un des buts de l'invention est de fournir une unité de climatisation permettant de traiter efficacement le phénomène de « spitting ». Un autre but de l'invention est de fournir une unité de climatisation simple, efficace, aisée à fabriquer et peu coûteuse.

A cette fin, l'invention a tout d'abord pour objet une unité de climatisation, notamment pour cabine de téléphérique, comprenant un caisson, ledit caisson comprenant un premier compartiment dans lequel est monté un évaporateur et un deuxième compartiment relié fluidiquement au premier compartiment via une ouverture et dans lequel est montée une soufflerie et au moins une buse de sortie d'air, ledit évaporateur étant adapté pour recevoir un flux d'air ambiant via une grille d'entrée d'air, pour refroidir ledit flux d'air reçu par évaporation d'un liquide réfrigérant et pour acheminer le flux d'air refroidi jusqu'au deuxième compartiment via ladite ouverture, ladite soufflerie étant adaptée pour faire circuler le flux d'air refroidi par ledit évaporateur hors du caisson via ladite au moins une buse de sortie d'air, le caisson étant remarquable en ce que le deuxième compartiment comprend un premier déflecteur du flux d'air sortant de l'évaporateur et un deuxième déflecteur du flux d'air sortant de l'évaporateur, ledit premier déflecteur et ledit deuxième déflecteur étant disposés entre la sortie de l'évaporateur et la soufflerie de sorte à former une chicane de déviation du flux d'air sortant de l'évaporateur.

La chicane est agencée afin d'éviter que le flux d'air s'applique en prise directe sur la soufflerie et ainsi que les gouttelettes atteignent la soufflerie ou d'autres équipements électriques internes de l'unité de climatisation ou bien l'air ambiant de l'endroit dans lequel l'unité est installée. Les déflecteurs permettent de capter les projections d'eau afin de les guider sous formes de gouttelettes jusqu'à la paroi inférieure où elles peuvent s'accumuler et être récupérées. L'invention permet donc d'empêcher l'humidité générée par l'évaporateur d'endommager les équipements électriques de l'unité de climatisation, notamment la soufflerie, et d'éviter que des projections ou des gouttelettes d'eau ne soient acheminées via la ou les buses de sortie de l'air refroidi dans la pièce ou la cabine dans laquelle l'unité est installée.

Avantageusement, le premier déflecteur et le deuxième déflecteur étant de forme rectangulaire en étant caractérisés par leur longueur, leur hauteur et leur épaisseur, la somme des hauteurs du premier déflecteur et du deuxième déflecteur est supérieure à la hauteur du deuxième compartiment afin de s'assurer que le flux d'air sortant de l'évaporateur n'atteigne la soufflerie et la ou les buses de sortie en prise directe.

Le premier déflecteur et le deuxième déflecteur pourraient être de forme différente tout en étant agencés pour s'assurer que les gouttelettes ne peuvent atteindre la soufflerie en prise directe.

De préférence, le deuxième compartiment comprenant une paroi supérieure et une paroi inférieure, le premier déflecteur s'étend perpendiculairement vers le bas depuis la paroi supérieure afin de dévier le flux d'air efficacement.

De préférence, le premier déflecteur s'étend selon une direction orthogonale à la direction du flux d'air sortant de l'évaporateur afin de dévier le flux d'air efficacement.

En variante, le premier déflecteur pourrait s'étendre obliquement par rapport à la direction du flux d'air sortant de l'évaporateur, de préférence en direction de la sortie de l'évaporateur, par exemple afin de s'adapter à la structure interne du premier compartiment.

De préférence, le deuxième compartiment comprenant une paroi supérieure et une paroi inférieure, le deuxième déflecteur s'étend depuis la paroi inférieure vers le haut et obliquement en direction de la sortie de l'évaporateur afin notamment de retenir l'eau accumulée sur la paroi inférieure du deuxième compartiment.

De préférence, le deuxième déflecteur s'étend obliquement par rapport à la direction du flux d'air sortant de l'évaporateur, de préférence en direction de la sortie de l'évaporateur, afin de dévier le flux d'air efficacement tout en permettant de retenir l'eau rejetée par l'évaporateur.

En variante, le deuxième déflecteur pourrait s'étendre selon une direction orthogonale à la direction du flux d'air sortant de l'évaporateur.

De préférence, le deuxième déflecteur forme un angle compris entre 0 et 45° avec la verticale.

De préférence encore, la paroi inférieure comprend une pente descendante d'écoulement de liquide entre l'évaporateur et le deuxième déflecteur permettant de piéger le liquide contre ledit deuxième déflecteur en formant un réservoir.

De manière préférée, la paroi inférieure du deuxième compartiment comprend un orifice d'évacuation de liquide.

De préférence, l'orifice d'évacuation de liquide est situé sous le deuxième déflecteur afin d'évacuer l'eau simplement et efficacement.

Avantageusement, l'unité de climatisation comprend un bac de récupération des eaux de condensation disposé sous l'évaporateur.

Selon un aspect de l'invention, l'unité de climatisation comprend un orifice sous le bac de récupération afin d'évacuer l'eau du bac de récupération afin d'évacuer l'eau simplement et efficacement.

Avantageusement, comprenant un élément absorbant disposé entre l'évaporateur et le premier déflecteur afin de réduire le pourcentage d'eau dans le flux d'air sortant de l'évaporateur.

De préférence, l'élément absorbant est une feutrine alvéolée, simple à utiliser, efficace et peu onéreuse.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La figure 1 est une vue en perspective d'une forme de réalisation d'une unité de climatisation selon l'invention montrant la face avant et la face supérieure du caisson.
[Fig 2] La figure 2 est une autre vue en perspective de l'unité de climatisation de la figure 1 montrant la face arrière et la face supérieure du caisson.
[Fig 3] La figure 3 est une autre vue en perspective de l'unité de climatisation de la figure 1 montrant la face arrière et la face inférieure du caisson.
[Fig 4] La figure 4 est une vue en perspective de l'unité de climatisation de la figure 1 dépourvue de son caisson.
[Fig 5] La figure 5 est une vue en perspective de l'unité de climatisation de la figure 4 dépourvue de son ventilateur et dans laquelle la deuxième chambre est dépourvue de sa paroi supérieure.
[Fig 6] La figure 6 est une vue en perspective de l'unité de climatisation de la figure 5 dépourvue de son condenseur.
[Fig 7] La figure 7 est une vue en perspective de l'unité de climatisation de la figure 4 dans laquelle la deuxième chambre est dépourvue de sa paroi supérieure.
[Fig 8] La figure 8 est une autre vue en perspective de l'unité de climatisation de la figure 7.
[Fig 9] La figure 9 est une vue agrandie de l'unité de climatisation de la figure 8 montrant la première chambre et la deuxième chambre.
[Fig 10] La figure 10 est une vue en coupe transversale du caisson.
[Fig 11] La figure 11 est une vue agrandie de la figure 10 montrant les flux d'air circulant dans la première chambre et dans la deuxième chambre.
[Fig 12] La figure 12 est une vue agrandie de la figure 10 montrant les cheminements d'eau circulant dans la première chambre et dans la deuxième chambre.

### [Description des modes de réalisation]

L'unité de climatisation selon l'invention est notamment destinée à être montée dans une cabine de téléphérique mais est adaptée à tout emplacement nécessitant une climatisation.

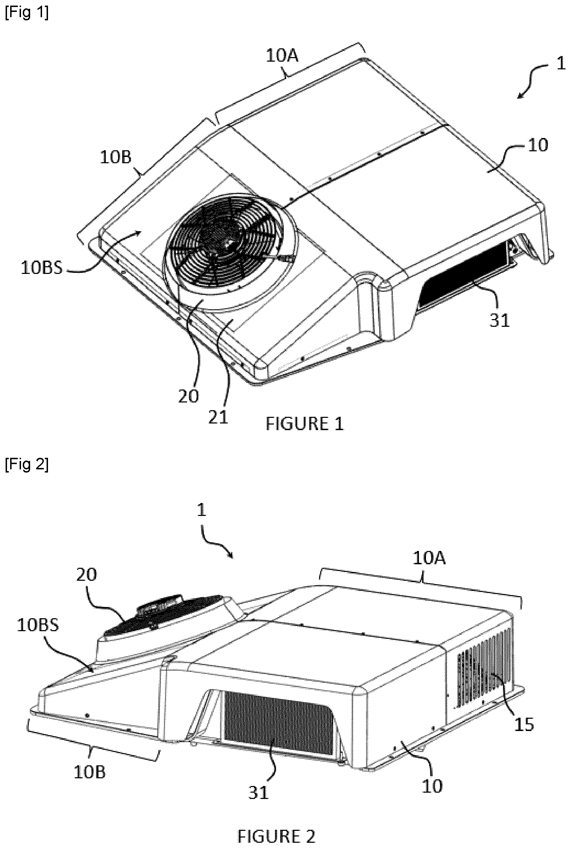

Les figures 1 à 3 illustrent une vue externe d'une forme de réalisation de l'unité de climatisation 1 selon l'invention.

L'unité de climatisation 1 comprend un caisson 10 se présentant sous la forme d'un boîtier comprenant une première partie 10A de forme sensiblement parallélépipédique et une deuxième partie 10B présentent sensiblement la forme d'un prisme triangulaire droit.

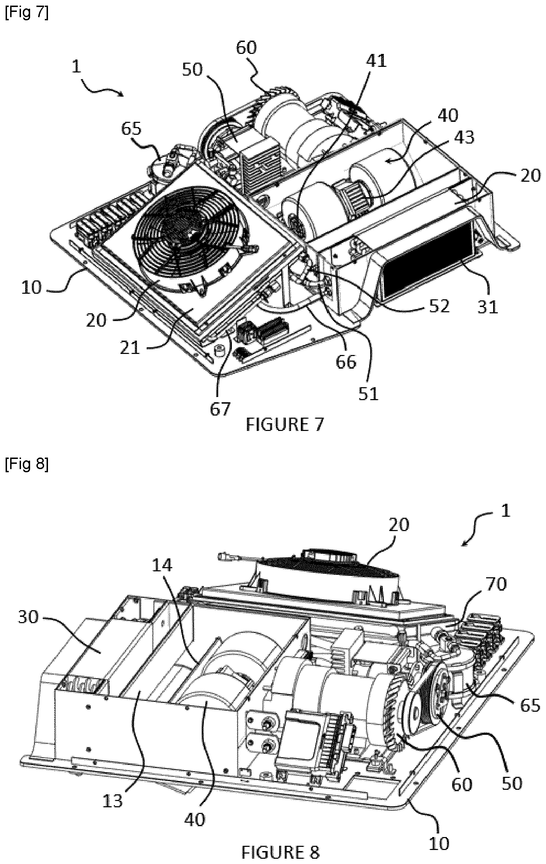

L'unité de climatisation 1 comprend un ventilateur 20 monté via une plaque de support 21 au niveau de la face supérieure 10BS de la deuxième partie 10B (figures 1, 4 et 7).

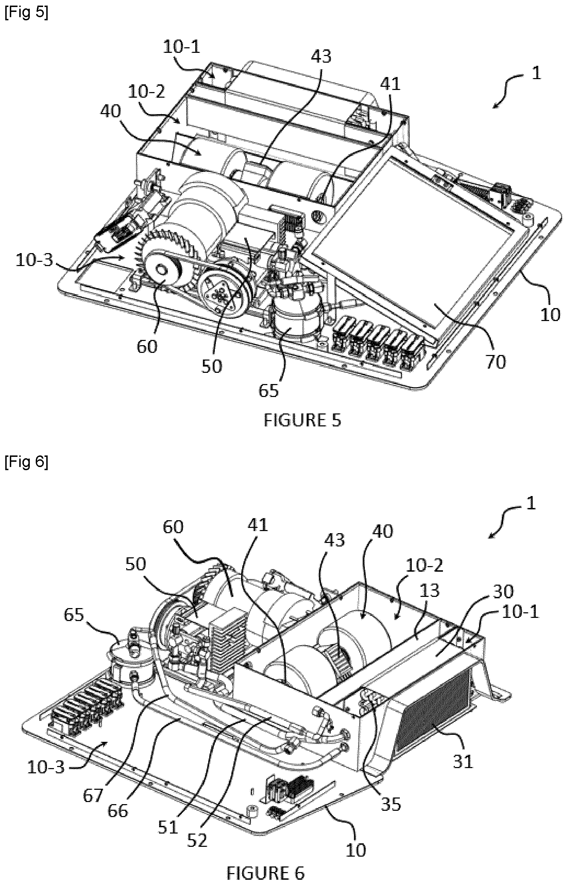

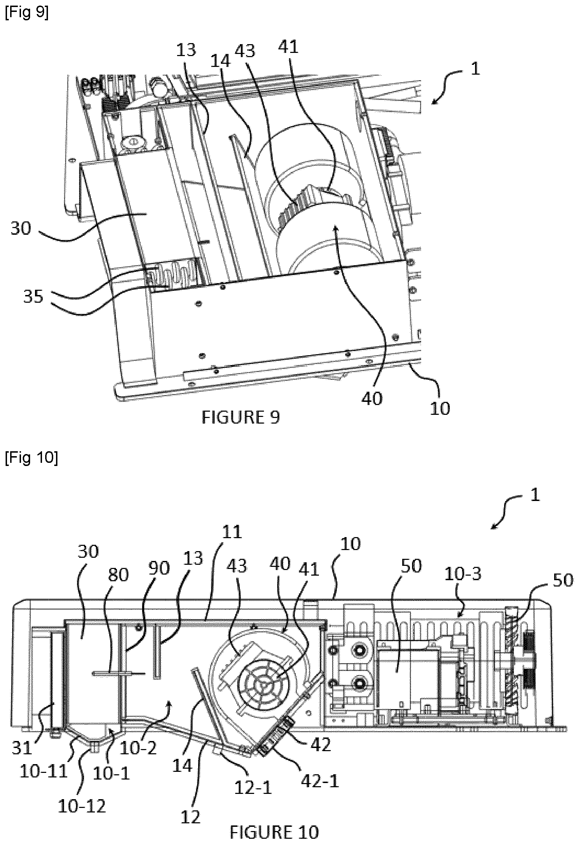

En référence aux figures 6 et 10, le caisson 10 délimite un espace intérieur et notamment un premier compartiment 10-1, un deuxième compartiment 10-2 et un troisième compartiment 10-3, le deuxième compartiment 10-2 étant relié fluidiquement au premier compartiment 10-1.

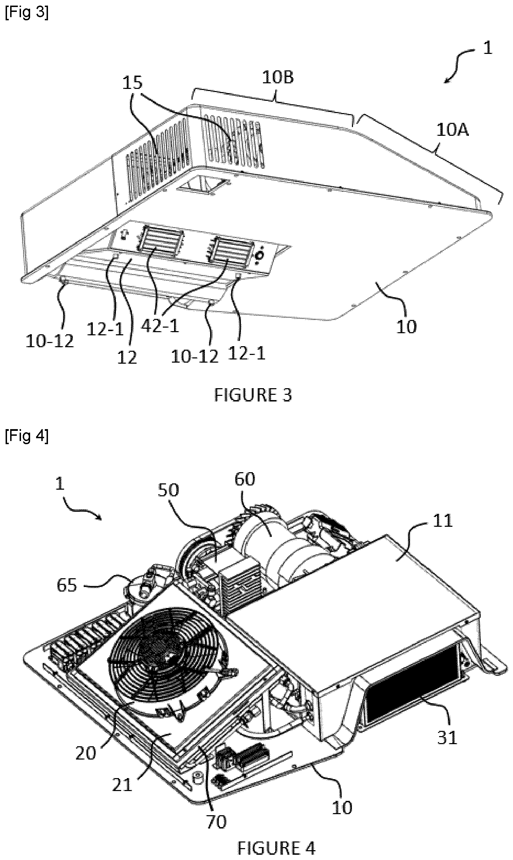

En référence à la figure 6, l'unité de climatisation 1 comprend un évaporateur 30, monté dans le premier compartiment 10-1 et une soufflerie 40, montée dans le deuxième compartiment 10-2. En référence aux figures 4 et 5, l'unité de climatisation 1 comprend également un compresseur 50, un moteur 60, un déshydratateur 65 et un condenseur 70. L'alimentation électrique des équipements électriques de l'unité de climatisation 1 peut être réalisée à partir d'une source de courant électrique externe ou d'une batterie interne (non représentée).

Le moteur 60 est électrique et permet d'entrainer le compresseur 50 afin que ledit compresseur 50 comprime le fluide réfrigérant basse pression issu de l'évaporateur 30 en un fluide réfrigérant haute pression pour l'envoyer vers le condenseur 70.

En référence à la figure 6, le compresseur 50 est relié via un premier conduit 51 à l'évaporateur 30 et via un deuxième conduit 52 au condenseur 70. De même, le déshydratateur 65 est relié via un premier conduit 66 à l'évaporateur 30 et via un deuxième conduit 67 au condenseur 70.

Le déshydratateur 65 constitue un espace de stockage du fluide réfrigérant

Le ventilateur 20 a pour fonction d'évacuer la phase gazeuse produite par le condenseur 70.

En référence aux figures 6 à 10, le premier compartiment 10-1 comporte une ouverture dans laquelle est montée une grille d'entrée d'air 31 adaptée pour recevoir l'air ambiant venant de l'extérieur du caisson 10 afin de le faire traverser l'évaporateur 30. Le premier compartiment 10-1 débouche sur le deuxième compartiment 10-2 au niveau de la sortie de l'évaporateur 30.

L'évaporateur 30 est placé dans le flux d'air circulant entre la grille d'entrée d'air 31 et la sortie du premier compartiment 10-1 et est configuré pour refroidir ledit flux d'air par évaporation d'un liquide réfrigérant. A cette fin, l'évaporateur 30 comprend une pluralité de tubes (non visibles) reliés par des crosses 35 (figure 9), par exemple en cuivre, formant un circuit interne dans l'évaporateur 30 et dans lequel circule un fluide réfrigérant.

L'unité de climatisation 1 est configurée pour fonctionner dans un mode de refroidissement dans lequel le liquide réfrigérant circule de l'évaporateur 30 vers le compresseur 50 puis vers le condenseur 70 puis vers le déshydratateur 65 et de nouveau vers l'évaporateur 30.

En référence à la figure 10, la soufflerie 40 comprend dans cet exemple deux buses d'entrée 41 d'air cylindriques, deux buses de sorties 42 d'air, sur chacune desquelles est montée une résistance 42-1, et un moteur 43. La soufflerie 40 est adaptée pour aspirer, via les buses d'entrée 41, le flux d'air entrant dans le deuxième compartiment 10-2, refroidi ou chauffé par l'évaporateur 30, afin de l'expulser vers l'extérieur du caisson 10 par les deux buses de sortie 42, à travers les deux résistances 42-1. Les deux résistances permettent de réchauffer ledit flux d'air sortant lorsqu'elles sont en fonctionnement (mode dit « de chauffage »). Dans une autre forme de réalisation, la soufflerie pourrait comprendre plus ou moins de deux buses d'entrée 41 et plus ou moins de deux buses de sortie 42.

Toujours en référence à la figure 10, le deuxième compartiment 10-2 comprend une paroi supérieure 11, une paroi inférieure 12, un premier déflecteur 13 du flux d'air sortant de l'évaporateur 30 et un deuxième déflecteur 14 du flux d'air sortant de l'évaporateur 30.

Le premier déflecteur 13 et le deuxième déflecteur 14 sont disposés entre la sortie de l'évaporateur 30 et la soufflerie 40 de sorte à former une chicane de déviation du flux d'air sortant de l'évaporateur 30 afin d'éviter que le flux d'air ne s'applique en prise directe sur la soufflerie 40, notamment sur les buses d'entrée 41, et ainsi que les gouttelettes atteignent la soufflerie ou d'autres équipements électriques internes de l'unité de climatisation 1 ou ne soit rejetées dehors par les buses de sortie 42. En d'autres termes, la surface du premier déflecteur 13 et du deuxième déflecteur 14 permettent d'occulter complètement la soufflerie 40 du point de vue de l'évaporateur 30, c'est-à-dire que leur surface cumulée est supérieure à la surface de la section transversale du deuxième compartiment 10-2.

Dans cet exemple préféré, le premier déflecteur 13 et le deuxième déflecteur 14 sont de forme rectangulaire et sont caractérisés par leur longueur, leur hauteur et leur épaisseur.

La somme de la hauteur H1 du premier déflecteur 13 et de la hauteur H2 du deuxième déflecteur 14 est supérieure à la hauteur du deuxième compartiment 10-2 afin de s'assurer que le flux d'air F traversant l'évaporateur 30 ne s'applique en prise directe sur la soufflerie 40.

Le premier déflecteur 13 s'étend verticalement depuis la paroi supérieure 11 du deuxième compartiment 10-2, en direction de la paroi inférieure 12, selon une direction orthogonale au flux d'air sortant de l'évaporateur 30 de sorte à recevoir en partie mais directement les projections d'eau issues de l'évaporateur 30.

Le deuxième déflecteur 14 s'étend obliquement vers le haut depuis la paroi inférieure 12 du deuxième compartiment 10-2 en direction du premier compartiment 10-1, c'est-à-dire en direction de la sortie de l'évaporateur 30.

De préférence, le deuxième déflecteur 14 forme un angle compris entre 0 et 45° avec la verticale, par exemple de l'ordre de 20° comme illustré sur les figures.

La paroi inférieure 12 du deuxième compartiment 10-2 comprend une pente descendante permettant l'écoulement de liquide entre l'évaporateur 30 et le deuxième déflecteur 14 afin de pouvoir piéger le liquide contre la base du deuxième déflecteur 14.

La paroi inférieure 12 du deuxième compartiment 10-2 comprend un orifice 12-1 d'évacuation de liquide situé sous la base du deuxième déflecteur 14 de sorte à récupérer les eaux de condensation stockées contre la base du deuxième déflecteur 14 par gravité.

En référence à la figure 10, la paroi inférieure 10-11 du premier compartiment 10-1 située sous l'évaporateur 30 est conformée de manière concave afin de former un bac de récupération des eaux de condensation, ce bac étant muni d'un orifice tubulaire 10-12 permettant de collecter les eaux de condensation récupérées par gravité.

Dans l'exemple illustré, l'unité de climatisation 10 comprend en outre avantageusement une sonde 80 (figure 10) permettant de prévenir les risques de gel ou givrage de l'élément évaporateur 30.

Toujours en référence à la figure 10, l'unité de climatisation 1 comprend également un élément absorbant 90, par exemple de type mousse ou feutrine alvéolée, disposé verticalement entre l'évaporateur 30 et le premier déflecteur 13 de sorte à recouvrir intégralement la sortie de l'évaporateur 30 afin de réduire les projections d'eau entrant dans le deuxième compartiment 10-2.

En référence aux figures 2 et 3, des fentes 15 sont prévues à travers la paroi latérale du caisson 10 afin d'évacuer la chaleur produite par les équipements électriques et/ou les résistances, le cas échéant.

### Mise en oeuvre

Le fluide réfrigérant a la capacité par ses changements d'état bi-phase (liquide et gazeux) de transférer l'énergie frigorifique et calorifique.

En mode de refroidissement, le fluide frigorigène arrive à l'état liquide dans l'évaporateur 30, passe à l'intérieur du circuit formé par les tubes et les crosses de l'évaporateur 30. Le flux d'air F ambiant repris en entrée d'évaporateur 30 va être soufflé sur ces tubes où passe le fluide réfrigérant. Au contact de cet air ambiant de la cabine de téléphérique, le fluide réfrigérant va s'évaporer par échange thermique et récupérer les calories se trouvant dans l'air ambiant.

Le fluide qui vient de s'évaporer (vapeur basse pression) est aspiré par le compresseur 50 puis recompressé pour aller se condenser dans le condenseur 70 où ce même fluide réfrigérant va repasser à l'état liquide pour finalement repartir vers l'évaporateur 30 via le déshydratateur 65, etc...

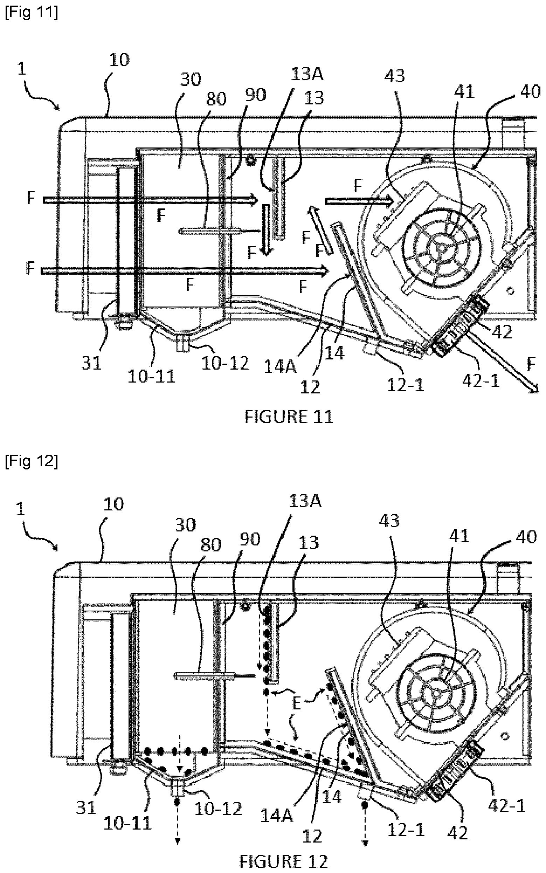

En fonctionnement de l'unité de climatisation 1, en référence aux figures 11 et 12, au moins une partie du flux d'air F sortant de l'évaporateur 30 est dirigé contre le premier déflecteur 13 qui le dévie sous ledit premier déflecteur 13. Ce faisant, les projections d'eau E issues du refroidissement ou du réchauffement du flux d'air ambiant par l'évaporateur 30 sont captées par la face avant 13A du premier déflecteur 13 pour la partie du flux d'air F atteignant le premier déflecteur 13 et s'écoulent par gravité le long de ladite face avant puis gouttent pour atteindre la paroi inférieure 12 de la deuxième chambre 10-2 qui les guident jusqu'à la base du deuxième déflecteur 14 où ils sont évacués via l'orifice 12-1. La partie du flux d'air F déviée par le premier déflecteur 13 est ensuite guidée par la paroi inférieure 12 de la deuxième chambre 10-2 jusqu'au deuxième déflecteur 14 qui le dévie à son tour. Une partie du flux d'air F sortant de l'évaporateur 30 peut passer directement sous le premier déflecteur 13, dans ce cas, cette partie du flux d'air F va atteindre directement la face avant 14A du deuxième déflecteur 14 de sorte que les projections d'eau E qu'il contient soient captées par ladite face avant 14A et s'écoulent par gravité le long de ladite face avant jusqu'à la base du deuxième déflecteur 14 pour être évacués par l'orifice 12-1.

L'invention permet donc de s'assurer que les projections d'eau contenues dans le flux d'air sortant de l'évaporateur 30 soient captées avant d'atteindre la soufflerie 40 et notamment les buses d'entrée 41, évitant ainsi d'endommager la soufflerie 40 ou de rejeter des projections d'eau à l'extérieur du caisson 10 via les buses de sorties 42.

## Revendications

1. Unité de climatisation (1), notamment pour cabine de téléphérique, comprenant un caisson (10), ledit caisson (10) comprenant un premier compartiment (10-1) dans lequel est monté un évaporateur (30) et un deuxième compartiment (10-2) relié fluidiquement au premier compartiment (10-1) via une ouverture et dans lequel est montée une soufflerie (40) et au moins une buse de sortie (42) d'air, ledit évaporateur (30) étant adapté pour recevoir un flux d'air (F) ambiant via une grille d'entrée d'air (31), pour refroidir ledit flux d'air (F) reçu par évaporation d'un liquide réfrigérant et pour acheminer le flux d'air (F) refroidi jusqu'au deuxième compartiment (10-2) via ladite ouverture, ladite soufflerie (40) étant adaptée pour faire circuler le flux d'air (F) refroidi par ledit évaporateur (30) hors du caisson (10) via ladite au moins une buse de sortie (42) d'air, le caisson (10) étant **caractérisé en ce que** le deuxième compartiment (10-2) comprend un premier déflecteur (13) du flux d'air (F) sortant de l'évaporateur (30) et un deuxième déflecteur (14) du flux d'air (F) sortant de l'évaporateur (30), ledit premier déflecteur (13) et ledit deuxième déflecteur (14) étant disposés entre la sortie de l'évaporateur (30) et la soufflerie (40) de sorte à former une chicane de déviation du flux d'air (F) sortant de l'évaporateur (30).

2. Unité de climatisation (1) selon la revendication 1, dans laquelle, le premier déflecteur (13) et le deuxième déflecteur (14) étant de forme rectangulaire en étant **caractérisés par** leur longueur, leur hauteur et leur épaisseur, la somme des hauteurs du premier déflecteur (13) et du deuxième déflecteur (14) est supérieure à la hauteur du deuxième compartiment (10-2).

3. Unité de climatisation (1) selon l'une quelconque des revendications précédentes, dans laquelle, le deuxième compartiment (10-2) comprenant une paroi supérieure (11) et une paroi inférieure (12), le premier déflecteur (13) s'étend perpendiculairement vers le bas depuis la paroi supérieure (11).

4. Unité de climatisation (1) selon l'une quelconque des revendications précédentes, dans laquelle le premier déflecteur (13) s'étend selon une direction orthogonale à la direction du flux d'air sortant de l'évaporateur (30).

5. Unité de climatisation (1) selon l'une quelconque des revendications 1 à 3, dans laquelle le premier déflecteur (13) s'étend obliquement par rapport à la direction du flux d'air sortant de l'évaporateur (30).

6. Unité de climatisation (1) selon l'une quelconque des revendications précédentes, dans laquelle, le deuxième compartiment (10-2) comprenant une paroi supérieure (11) et une paroi inférieure (12), le deuxième déflecteur (14) s'étend depuis la paroi inférieure (12) vers le haut et obliquement en direction de la sortie de l'évaporateur (30).

7. Unité de climatisation (1) selon l'une quelconque des revendications précédentes, dans laquelle le deuxième déflecteur (14) s'étend obliquement par rapport à la direction du flux d'air sortant de l'évaporateur (30).

8. Unité de climatisation (1) selon l'une quelconque des revendications 6 ou 7, dans laquelle le deuxième déflecteur (14) forme un angle compris entre 0 et 45° avec la verticale.

9. Unité de climatisation (1) selon la revendication précédente, dans laquelle la paroi inférieure (12) comprend une pente descendante d'écoulement de liquide entre l'évaporateur (30) et le deuxième déflecteur (14) permettant de piéger le liquide contre ledit deuxième déflecteur (14).

10. Unité de climatisation (1) selon la revendication précédente, dans laquelle la paroi inférieure (12) du deuxième compartiment (10-2) comprend un orifice (12-1) d'évacuation de liquide.

11. Unité de climatisation (1) selon la revendication précédente, dans lequel l'orifice (12-1) d'évacuation de liquide est situé sous le deuxième déflecteur (14).

12. Unité de climatisation (1) selon l'une quelconque des revendications précédentes, comprenant un bac de récupération (10-11) des eaux de condensation disposé sous l'évaporateur (30).

13. Unité de climatisation (1) selon la revendication précédente, comprenant un orifice sous le bac de récupération (10-11).

14. Unité de climatisation (1) selon l'une quelconque des revendications précédentes, comprenant un élément absorbant (90) disposé entre l'évaporateur (30) et le premier déflecteur (13).

15. Unité de climatisation (1) selon la revendication précédente, dans lequel l'élément absorbant (90) est une feutrine alvéolée.

## Patentansprüche

1. Klimaanlageneinheit (1), insbesondere für eine Seilbahnkabine, umfassend ein Gehäuse (10), wobei das Gehäuse (10) ein erstes Fach (10-1), in dem ein Verdampfer (30) angebracht ist, und ein zweites Fach (10-2) umfasst, das über eine Öffnung mit dem ersten Fach (10-1) fluidisch verbunden ist und in dem ein Gebläse (40) und mindestens eine Luftaustrittsdüse (42) angebracht sind, wobei der Verdampfer (30) geeignet ist, einen Umgebungsluftstrom (F) über ein Lufteinlassgitter (31) zu empfangen, den empfangenen Luftstrom (F) durch Verdampfen einer Kühlfüssigkeit zu kühlen und den gekühlten Luftstrom (F) über die Öffnung bis zum zweiten Fach (10-2) zu befördern, wobei das Gebläse (40) geeignet ist, den durch den Verdampfer (30) gekühlten Luftstrom (F) über die mindestens eine Luftaustrittsdüse (42) aus dem Gehäuse (10) zu leiten, wobei das Gehäuse (10) **dadurch gekennzeichnet ist, dass** das zweite Fach (10-2) einen ersten Ablenker (13) für den aus dem Verdampfer (30) austretenden Luftstrom (F) und einen zweiten Ablenker (14) für den aus dem Verdampfer (30) austretenden Luftstrom (F) umfasst, wobei der erste Ablenker (13) und der zweite Ablenker (14) zwischen dem Ausgang des Verdampfers (30) und dem Gebläse (40) derart angeordnet sind, dass eine Umlenkvorrichtung für den aus dem Verdampfer (30) austretenden Luftstrom (F) gebildet wird.

2. Klimaanlageneinheit (1) nach Anspruch 1, wobei, wobei der erste Ablenker (13) und der zweite Ablenker (14) eine rechteckige Form haben, indem sie durch ihre Länge, ihre Höhe und ihre Dicke gekennzeichnet sind, wobei die Summe der Höhen des ersten Ablenkers (13) und des zweiten Ablenkers (14) größer ist als die Höhe des zweiten Fachs (10-2).

3. Klimaanlageneinheit (1) nach einem der vorhergehenden Ansprüche, wobei, wobei das zweite Fach (10-2) eine obere Wand (11) und eine untere Wand (12) umfasst, sich der erste Ablenker (13) ab der oberen Wand (11) senkrecht nach unten erstreckt.

4. Klimaanlageneinheit (1) nach einem der vorhergehenden Ansprüche, wobei sich der erste Ablenker (13) in einer Richtung orthogonal zur Richtung des Luftstroms erstreckt, der aus dem Verdampfer (30) austritt.

5. Klimaanlageneinheit (1) nach einem der Ansprüche 1 bis 3, wobei sich der erste Ablenker (13) schräg zur Richtung des aus dem Verdampfer (30) austretenden Luftstroms erstreckt.

6. Klimaanlageneinheit (1) nach einem der vorhergehenden Ansprüche, wobei, wobei das zweite Fach (10-2) eine obere Wand (11) und eine untere Wand (12) umfasst, sich der zweite Ablenker (14) ab der unteren Wand (12) nach oben und schräg in Richtung des Ausgangs des Verdampfers (30) erstreckt.

7. Klimaanlageneinheit (1) nach einem der vorhergehenden Ansprüche, wobei sich der zweite Ablenker (14) schräg zur Richtung des Luftstroms erstreckt, der aus dem Verdampfer (30) austritt.

8. Klimaanlageneinheit (1) nach einem der Ansprüche 6 oder 7, wobei der zweite Ablenker (14) einen Winkel zwischen 0 und 45° mit der Vertikalen bildet.

9. Klimaanlageneinheit (1) nach vorhergehendem Anspruch, wobei die untere Wand (12) ein abfallendes Flüssigkeitsströmungsgefälle zwischen dem Verdampfer (30) und dem zweiten Ablenker (14) umfasst, das es ermöglicht, die Flüssigkeit gegen den zweiten Ablenker (14) einzufangen.

10. Klimaanlageneinheit (1) nach vorhergehendem Anspruch, wobei die untere Wand (12) des zweiten Fachs (10-2) eine Flüssigkeitsauslassöffnung (12-1) umfasst.

11. Klimaanlageneinheit (1) nach vorhergehendem Anspruch, wobei die Flüssigkeitsauslassöffnung (12-1) unterhalb des zweiten Ablenkers (14) angeordnet ist.

12. Klimaanlageneinheit (1) nach einem der vorhergehenden Ansprüche, umfassend eine Kondenswasserauffangwanne (10-11), die unterhalb des Verdampfers (30) angeordnet ist.

13. Klimaanlageneinheit (1) nach vorhergehendem Anspruch, umfassend ein Loch unter der Auffangwanne (10-11).

14. Klimaanlageneinheit (1) nach einem der vorhergehenden Ansprüche, umfassend ein Absorptionselement (90), das zwischen dem Verdampfer (30) und der ersten Ablenkplatte (13) angeordnet ist.

15. Klimaanlageneinheit (1) nach vorhergehendem Anspruch, wobei das Absorptionselement (90) ein zelliger Filz ist.

## Claims

1. An air-conditioning unit (1), in particular for a cable car cabin, comprising a case (10), said case (10) comprising a first compartment (10-1) in which an evaporator (30) is mounted and a second compartment (10-2) fluidically connected to the first compartment (10-1) via an opening and wherein a blower (40) and at least one air outlet nozzle (42) are mounted, said evaporator (30) being adapted to receive an ambient air stream (F) via an air inlet grille (31), to cool said received air stream (F) by evaporation of a refrigerant liquid and to convey the cooled air stream (F) to the second compartment (10-2) via said opening, said blower (40) being adapted to circulate the air stream (F) cooled by said evaporator (30) out of the case (10) via said at least one air outlet nozzle (42), the case (10) being **characterized in that** the second compartment (10-2) comprises a first deflector (13) of the air stream (F) exiting the evaporator (30) and a second deflector (14) of the air stream (F) exiting the evaporator (30), said first deflector (13) and said second deflector (14) being arranged between the outlet of the evaporator (30) and the blower (40) so as to form a baffle for deflecting the air stream (F) leaving the evaporator (30).

2. The air-conditioning unit (1) according to claim 1, wherein, the first deflector (13) and the second deflector (14) being rectangular in shape and **characterized by** their length, height and thickness, the sum of the heights of the first deflector (13) and the second deflector (14) is greater than the height of the second compartment (10-2).

3. The air-conditioning unit (1) according to any one of the preceding claims, wherein, the second compartment (10-2) comprising a top wall (11) and a bottom wall (12), the first deflector (13) extends perpendicularly downwards from the top wall (11).

4. The air-conditioning unit (1) according to any one of the preceding claims, wherein the first deflector (13) extends in a direction orthogonal to the direction of the air stream leaving the evaporator (30).

5. The air-conditioning unit (1) according to any one of claims 1 to 3, wherein the first deflector (13) extends obliquely to the direction of the air stream leaving the evaporator (30).

6. The air-conditioning unit (1) according to any one of the preceding claims, wherein, the second compartment (10-2) comprising a top wall (11) and a bottom wall (12), the second deflector (14) extends from the bottom wall (12) upwards and obliquely towards the evaporator outlet (30).

7. The air-conditioning unit (1) according to any one of the preceding claims, wherein the second deflector (14) extends obliquely to the direction of the air stream leaving the evaporator (30).

8. The air-conditioning unit (1) according to any one of claims 6 or 7, wherein the second deflector (14) forms an angle of between 0 and 45° with the vertical.

9. The air-conditioning unit (1) according to the preceding claim, wherein the bottom wall (12) comprises a downward liquid-flow slope between the evaporator (30) and the second deflector (14) enabling liquid to be trapped against said second deflector (14).

10. The air-conditioning unit (1) according to the preceding claim, wherein the bottom wall (12) of the second compartment (10-2) comprises a liquid discharge orifice (12-1).

11. The air-conditioning unit (1) according to the preceding claim, wherein the liquid discharge orifice (12-1) is located below the second deflector (14).

12. The air-conditioning unit (1) according to any one of the preceding claims, comprising a condensation water drain pan (10-11) arranged under the evaporator (30).

13. The air-conditioning unit (1) according to the preceding claim, comprising an orifice under the drain pan (10-11).

14. The air-conditioning unit (1) according to any one of the preceding claims, comprising an absorbent element (90) arranged between the evaporator (30) and the first deflector (13).

15. The air-conditioning unit (1) according to the preceding claim, wherein the absorbent element (90) is a honeycombed felt.
